# EUROPEAN PATENT APPLICATION

(11) **EP 4 059 983 A1**
(43) Date of publication of application: **21.09.2022**
(21) Application number: 20888115.1
(22) Date of filing: 13.11.2020
(51) Int. Cl.: C08G 65/32, C07B 61/00

(54) **METHOD FOR PRODUCING FLUOROPOLYETHER-GROUP-CONTAINING COMPOUND**

(30) Priority: 13.11.2019 JP 2019205506
(71) Applicant: Daikin Industries, Ltd., Osaka-shi, Osaka 530-8323 (JP)
(72) Inventor: TAKANO, Shinya, Osaka-shi, Osaka 530-8323 (JP); NOMURA, Takashi, Osaka-shi, Osaka 530-8323 (JP); NAITOU, Masato, Osaka-shi, Osaka 530-8323 (JP); KONNO, Tsutomu, Kyoto-shi, Kyoto 606-8585 (JP); YAMADA, Shigeyuki, Kyoto-shi, Kyoto 606-8585 (JP)
(74) Representative: Hoffmann Eitle
(86) International application number: PCT/JP2020/042503
(87) International publication number: WO 2021/095872

(57) **Abstract**

A method for producing a fluoropolyether group-containing compound, comprising reacting a fluoropolyether group-containing compound (A) represented by the following formula:

X¹¹-(R¹¹)ₙ₁₁-R^{F1}X¹² (1)

in the presence of a metal catalyst to form a fluoropolyether group-containing compound (B) containing two or more moieties derived from the fluoropolyether group-containing compound (A). Each of symbols is as defined in the description.

## Description

### Technical Field

The present disclosure relates to a method for producing a fluoropolyether group-containing compound, specifically, a non-reactive fluoropolyether group-containing compound.

### Background Art

Non-reactive fluoropolyether group-containing compounds have often been used in applications where heat resistance or durability against chemical substances is required (for example, Patent Literature 1).

### Citation List

### Patent Literature

Patent Literature 1: JP 2014-65884 A

### Summary of Invention

### Technical Problem

An object of the present disclosure is to provide a new method for producing a non-reactive fluoropolyether group-containing compound.

### Solution to Problem

The present disclosure provides [1] to [11] below.
[1] A method for producing a fluoropolyether group-containing compound, comprising reacting a fluoropolyether group-containing compound (A) represented by the following formula:

   X¹¹-(R¹¹)ₙ₁₁-R^{F1}-X¹² (1)

   [In the formula:
   X¹¹ and X¹² are each independently a fluorine atom, a chlorine atom, a bromine atom, an iodine atom, or a hydrogen atom, provided that at least one of X¹¹ and X¹² is a chlorine atom, a bromine atom, or an iodine atom;
   R¹¹ is a C₁₋₁₆ alkylene group optionally substituted with one or more fluorine atoms;
   n11 is 0 or 1; and
   R^{F1} is a group represented by the following formula: -(OC₆F₁₂)ₐ₁-(OC₅F₁₀)_{b1}-(OC₄F₈)_{c1}-(OC₃R^{Fa}₆)_{d1}-(OC₂F₄)ₑ₁-(OCF₂)_{f1}-;
   a1, b1, c1, d1, e1, and f1 are each independently an integer of 0 to 200, the sum of a1, b1, c1, d1, e1, and f1 is 1 or more, and the occurrence order of the respective repeating units enclosed in parentheses provided with a1, b1, c1, d1, e1, or f1 is not limited in the formula; and
   R^{Fa} is each independently at each occurrence a hydrogen atom, a fluorine atom, or a chlorine atom.] in the presence of a metal catalyst to form a fluoropolyether group-containing compound (B) containing two or more moieties derived from the fluoropolyether group-containing compound (A).
[2] The method for producing a fluoropolyether group-containing compound according to [1], wherein the metal catalyst contains at least one selected from the group consisting of Ni, Pd, Pt, Cu, Ag, Zn, Cd, Hg, and Mg.
[3] The method for producing a fluoropolyether group-containing compound according to [1] or [2], wherein the metal catalyst contains at least one selected from the group consisting of Ni, Pd, Pt, Cu, and Ag.
[4] The method for producing a fluoropolyether group-containing compound according to any one of [1] to [3], wherein the formula (1) is represented by the following formula (1a) or (1b):

   X¹L(R¹¹)ₙ₁₁-R^{F1}X¹² (1a)

   [In the formula:
   X¹¹ is a fluorine atom or a hydrogen atom;
   X¹² is a chlorine atom, a bromine atom, or an iodine atom;
   R¹¹ is a C₁₋₁₆ alkylene group optionally substituted with one or more fluorine atoms;
   n11 is 0 or 1; and
   R^{F1} is the same as defined in [1].] or

   X¹¹-(R¹¹)ₙ₁₁-R^{F1}-X¹² (1b) (1a)

   [In the formula:
   X¹¹ and X¹² are each independently a chlorine atom, a bromine atom, or an iodine atom;
   R¹¹ is a C₁₋₆ alkylene group optionally substituted with one or more fluorine atoms;
   n11 is each independently 0 or 1; and
   R^{F1} is the same as defined in [1].].
[5] The method for producing a fluoropolyether group-containing compound according to any one of [1] to [4], wherein R^{Fa} is a fluorine atom.
[6] The method for producing a fluoropolyether group-containing compound according to any one of [1] to [5], wherein R^{F1} is each independently at each occurrence represented by the following formula (f1), (f2), (f3), (f4), or (f5):

   -(OC₃F₆)_{d1}-(OC₂F₄)ₑ₁- (f1)

   [In the formula, d1 is an integer of 1 to 200 and e1 is 1.] ;

   -(OC₄F₈)_{c1}-(OC₃F₆)_{d1}-(OC₂F₄)ₑ₁-(OCF₂)_{f1}- (f2)

   [In the formula, c1 and d1 are each independently an integer of 0 or more and 30 or less, and e1 and f1 are each independently an integer of 1 or more and 200 or less,
   the sum of c1, d1, e1, and f1 is 2 or more, and
   the occurrence order of the respective repeating units enclosed in parentheses provided with a subscript c1, d1, e1, or f1 is not limited in the formula.] ;

   -(R⁶-R⁷)_{g1}- (f3)

   [In the formula, R⁶ is OCF₂ or OC₂F₄,
   R⁷ is a group selected from OC₂F₄, OC₃F₆, OC₄F₈, OC₅F₁₀, and OC₆F₁₂, or a combination of two or three groups independently selected from these groups, and
   g1 is an integer of 2 to 100.] ;

   -(OC₆F₁₂)ₐ₁-(OC₅F₁₀)_{b1}-(OC₄F₈)_{c1}-(OC₃F₆)_{d1}-(OC₂F₄)ₑ₁-(OCF₂)_{f1}- (f4)

   [In the formula, e1 is an integer of 1 or more and 200 or less, a1, b1, c1, d1, and f1 are each independently an integer of 0 or more and 200 or less, the sum of a1, b1, c1, d1, e1, and f1 is at least 1, and the occurrence order of the respective repeating units enclosed in parentheses provided with a1, b1, c1, d1, e1, or f1 is not limited in the formula.] ; or

   -(OC₆F₁₂)ₐ₁-(OC₅F₁₀)_{b1}-(OC₄F₈)_{c1}-(OC₃F₆)_{d1}-(OC₂F₄)ₑ₁-(OCF₂)_{f1}- (f5)

   [In the formula, f1 is an integer of 1 or more and 200 or less, a1, b1, c1, d1, and e1 are each independently an integer of 0 or more and 200 or less, the sum of a1, b1, c1, d1, e1, and f1 is at least 1, and the occurrence order of the respective repeating units enclosed in parentheses provided with a1, b1, c1, d1, e1, or f1 is not limited in the formula.].
[7] The method for producing a fluoropolyether group-containing compound according to any one of [1] to [6], wherein n11 is 1.
[8] The method for producing a fluoropolyether group-containing compound according to any one of [1] to [7], wherein the method is carried out in a solvent.
[9] The method for producing a fluoropolyether group-containing compound according to [8], wherein the solvent is a fluorinated solvent and/or a non-fluorinated solvent.
[10] A fluoropolyether group-containing compound represented by the following formula:

   X²¹-(R²¹)ₙ₂₁-R^{F2}-(O)ₙ₂₃-(R²²)ₙ₂₂-X²² (2)

   [In the formula:
   X²¹ and X²² are each independently a fluorine atom, a chlorine atom, a bromine atom, an iodine atom, or a hydrogen atom;
   R²¹ and R²² are each independently a C₁₋₁₆ alkylene group optionally substituted with one or more fluorine atoms;
   n21, n22, and n23 are each independently 0 or 1; and
   R^{F2} is a group represented by the following formula:

      -(OC₃F₆)_{d22}-(OC₄F₈)-(OC₃F₆)_{d23}-

      or

      -(OC₃F₆)_{d24}-((OC₄F₈)_{d25}-(OC₃F₆)_{d26})_{d28}-(OC₄F₈)_{d27}-(OC₃F₆)_{d29}-;
   d22 and d23 are each independently an integer of 3 to 100; and
   d24 is an integer of 3 to 100, d25 is an integer of 0 to 1, d26 is an integer of 3 to 100, d27 is an integer of 0 to 1, d28 is an integer of 1 to 30, and d29 is an integer of 3 to 100.].
[11] The fluoropolyether group-containing compound according to [10], wherein R^{F2} is a group represented by the following formula:

   -(OC₃F₆)_{d22}-(OC₄F₈)-(OC₃F₆)_{d23}-;

   and d22 and d23 are each independently an integer of 3 to 100.

### Advantageous Effect of Invention

According to the present invention, it is possible to provide a new method for producing a non-reactive fluoropolyether group-containing compound.

### Description of Embodiments

### (Production Method)

Hereinafter, one aspect of the present disclosure, a method for producing a fluoropolyether group-containing compound, will be described. The (non-reactive) fluoropolyether group-containing compound, preferably perfluoro(poly)ether group-containing compound in the present specification is a compound that can be referred to as a "fluorine-containing oil".

The method for producing a fluoropolyether group-containing compound of the present disclosure includes the step below.

### <Step (I)>

Reacting a fluoropolyether group-containing compound (A) represented by the following formula:

X¹¹-(R¹¹)ₙ₁₁-R^{F1}-X¹² (1)

in the presence of a metal catalyst to form a fluoropolyether group-containing compound (B) containing two or more moieties derived from the fluoropolyether group-containing compound (A).

In the formula (1), X¹¹ and X¹² are each independently a fluorine atom, a chlorine atom, a bromine atom, an iodine atom, or a hydrogen atom. However, at least one of X¹¹ and X¹² is a chlorine atom, a bromine atom, or an iodine atom, and contributes to the reaction in the above step (I).

At least one of X¹¹ and X¹² is preferably a bromine atom or an iodine atom, and more preferably an iodine atom. With such a part, the reaction of step (I) can proceed better.

In one embodiment, X¹¹ is a chlorine atom, a bromine atom, or an iodine atom, preferably a bromine atom or an iodine atom, and more preferably an iodine atom; and X¹² is a fluorine atom or a hydrogen atom, and preferably a fluorine atom.

In one embodiment, X¹¹ is a fluorine atom or a hydrogen atom, and preferably a fluorine atom; and X¹² is a chlorine atom, a bromine atom, or an iodine atom, preferably a bromine atom or an iodine atom, and more preferably an iodine atom.

In one embodiment, X¹¹ and X¹² are each independently a chlorine atom, a bromine atom, or an iodine atom, preferably a bromine atom or an iodine atom, and more preferably an iodine atom.

In the formula (1), R¹¹ is a C₁₋₁₆ alkylene group optionally substituted with one or more fluorine atoms.

In the above C₁₋₁₆ alkylene group optionally substituted with one or more fluorine atoms, the "C₁₋₁₆ alkylene group" may be linear or branched, and is preferably a linear or branched C₁₋₆ alkylene group, in particular C₁₋₃ alkylene group, and more preferably a linear C₁₋₆ alkylene group, in particular C₁₋₃ alkylene group.

The above R¹¹ is preferably a C₁₋₁₆ alkylene group substituted with one or more fluorine atoms, and more preferably a C₁₋₁₆ perfluoroalkylene group.

The above C₁₋₁₆ perfluoroalkylene group may be linear or branched, and is preferably a linear or branched C₁₋₆ perfluoroalkylene group, in particular C₁₋₃ perfluoroalkylene group, and more preferably a linear C₁₋₆ perfluoroalkylene group, in particular C₁₋₃ perfluoroalkylene group.

In one embodiment, R¹¹ is a C₁₋₆ alkylene group optionally substituted with one or more fluorine atoms.

In the above embodiment, the "C₁₋₆ alkylene group" may be linear or branched, and is preferably a linear or branched C₁₋₃ alkylene group, and more preferably a linear C₁₋₆ alkylene group, in particular C₁₋₃ alkylene group.

In the above embodiment, R¹¹ is preferably a C₁₋₆ alkylene group substituted with one or more fluorine atoms, and more preferably a C₁₋₆ perfluoroalkylene group. In the present embodiment, the above C₁₋₆ perfluoroalkylene group may be linear or branched, and is preferably a linear C₁₋₆ perfluoroalkylene group, in particular C₁₋₃ perfluoroalkylene group.

In the formula (1), n11 is 0 or 1. In one embodiment, n11 is 0. In one embodiment, n11 is 1.

In the formula (1), R^{F1} is a group represented by the following formula:

-(OC₆F₁₂)ₐ₁-(OC₅F₁₀)_{b1}-(OC₄F₈)_{c1}-(OC₃R^{Fa}₆)_{d1}-(OC₂F₄)ₑ₁-(OCF₂)_{f1}-.

In the formula, a1, b1, c1, d1, e1, and f1 are each independently an integer of 0 to 200, the sum of a1, b1, c1, d1, e1, and f1 is 1 or more, and the occurrence order of the respective repeating units enclosed in parentheses provided with a1, b1, c1, d1, e1, or f1 is not limited in the formula; and
R^{Fa} is each independently at each occurrence a hydrogen atom, a fluorine atom, or a chlorine atom. Note that, in the present specification, the left side of R^{F1} is bonded to R¹¹ and the right side of R^{F1} is bonded to X¹².

R^{Fa} is preferably a hydrogen atom or a fluorine atom, and more preferably a fluorine atom.

Preferably, a1, b1, c1, d1, e1, and f1 may be each independently an integer of 0 to 100.

The sum of a1, b1, c1, d1, e1, and f1 is preferably 5 or more, and more preferably 10 or more, and it may be, for example, 15 or more or 20 or more. The sum of a1, b1, c1, d1, e1, and f1 is preferably 200 or less, more preferably 100 or less, and still more preferably 60 or less, and it may be, for example, 50 or less or 30 or less.

These repeating units may be linear or branched. For example, in the above repeating units, -(OC₆F₁₂)- may be -(OCF₂CF₂CF₂CF₂CF₂CF₂)-, -(OCF(CF₃)CF₂CF₂CF₂CF₂)-, - (OCF₂CF(CF₃)CF₂CF₂CF₂)-, -(OCF₂CF₂CF(CF₃)CF₂CF₂)-, - (OCF₂CF₂CF₂CF(CF₃)CF₂)-, -(OCF₂CF₂CF₂CF₂CF(CF₃))-, or the like. -(OC₅F₁₀)- may be -(OCF₂CF₂CF₂CF₂CF₂)-, - (OCF (CF₃)CF₂CF₂CF₂)-, -(OCF₂CF(CF₃)CF₂CF₂)-, - (OCF₂CF₂CF(CF₃)CF₂)-, -(OCF₂CF₂CF₂CF(CF₃))-, or the like. - (OC₄F₈)- may be any of -(OCF₂CF₂CF₂CF₂)-, -(OCF (CF₃)CF₂CF₂)-, -(OCF₂CF(CF₃)CF₂)-, -(OCF₂CF₂CF(CF₃))-, -(OC(CF₃)₂CF₂)-, - (OCF₂C(CF₃)₂)-, -(OCF (CF₃)CF(CF₃))-, -(OCF(C₂F₅)CF₂)-, and -(OCF₂CF(C₂F₅))-. -(OC₃F₆)- (that is, in the above formula, R^{Fa} is a fluorine atom) may be any of -(OCF₂CF₂CF₂)-, - (OCF (CF₃)CF₂)-, and -(OCF₂CF(CF₃))-. -(OC₂F₄)- may be any of -(OCF₂CF₂)- and -(OCF(CF₃))-.

In one embodiment, the above repeating units are linear.

In one embodiment, the above repeating units include branched ones.

In one embodiment, R^{F1} is each independently at each occurrence a group represented by any of the following formulae (f1) to (f5):

-(OC₃F₆)_{d1}-(OC₂F₄)ₑ₁- (f1)

[In the formula, d1 is an integer of 1 to 200 and e1 is 1.] ;

-(OC₄F₈)_{c1}-(OC₃F₆)_{d1}-(OC₂F₄)ₑ₁-(OCF₂)_{f1}- (f2)

[In the formula, c1 and d1 are each independently an integer of 0 or more and 30 or less, and e1 and f1 are each independently an integer of 1 or more and 200 or less,
the sum of c1, d1, e1, and f1 is 2 or more, and
the occurrence order of the respective repeating units enclosed in parentheses provided with a subscript c1, d1, e1, or f1 is not limited in the formula.] ;

-(R⁶-R⁷)_{g1}- (f3)

[In the formula, R⁶ is OCF₂ or OC₂F₄,
R⁷ is a group selected from OC₂F₄, OC₃F₆, OC₄F₈, OC₅F₁₀, and OC₆F₁₂, or a combination of two or three groups independently selected from these groups, and
g1 is an integer of 2 to 100.] ;

-(OC₆F₁₂)ₐ₁-(OC₅F₁₀)_{b1}-(OC₄F₈)_{c1}-(OC₃F₆)_{d1}-(OC₂F₄)ₑ₁-(OCF₂)_{f1}- (f4)

[In the formula, e1 is an integer of 1 or more and 200 or less, a1, b1, c1, d1, and f1 are each independently an integer of 0 or more and 200 or less, the sum of a1, b1, c1, d1, e1, and f1 is at least 1, and the occurrence order of the respective repeating units enclosed in parentheses provided with a1, b1, c1, d1, e1, or f1 is not limited in the formula.] ; and

-(OC₆F₁₂)ₐ₁-(OC₅F₁₀)_{b1}-(OC₄F₈)_{c1}-(OC₃F₆)_{d1}-(OC₂F₄)ₑ₁-(OCF₂)_{f1}- (f5)

[In the formula, f1 is an integer of 1 or more and 200 or less, a1, b1, c1, d1, and e1 are each independently an integer of 0 or more and 200 or less, the sum of a1, b1, c1, d1, e1, and f1 is at least 1, and the occurrence order of the respective repeating units enclosed in parentheses provided with a1, b1, c1, d1, e1, or f1 is not limited in the formula.].

In the above formula (f1), d1 is preferably an integer of 5 to 200, more preferably an integer of 10 to 100, and still more preferably an integer of 15 to 50, and, for example, an integer of 25 to 35. The above formula (f1) is preferably a group represented by - (OCF₂CF₂CF₂)_{d1}-(OC₂F₄)ₑ₁- or -(OCF (CF₃)CF₂)_{d1}-(OC₂F₄)ₑ₁-, and more preferably a group represented by -(OCF₂CF₂CF₂)_{d1}-(OC₂F₄)ₑ₁-.

In the above formula (f2), e1 and f1 are each independently an integer of preferably 5 or more and 200 or less, and more preferably an integer of 10 to 200. In addition, the sum of c1, d1, e1, and f1 is preferably 5 or more, and more preferably 10 or more, and it may be, for example, 15 or more or 20 or more. In one embodiment, the above formula (f2) is preferably a group represented by -(OCF₂CF₂CF₂CF₂)_{c1}-(OCF₂CF₂CF₂)_{d1}-(OCF₂CF₂)ₑ₁-(OCF₂)_{f1}-. In another embodiment, the formula (f2) may be a group represented by -(OC₂F₄)ₑ₁-(OCF₂)_{f1}-.

In the above formula (f3), R⁶ is preferably OC₂F₄. In the above formula (f3), R⁷ is preferably a group selected from OC₂F₄, OC₃F₆, and OC₄F₈, or a combination of two or three groups independently selected from these groups, and more preferably a group selected from OC₃F₆ and OC₄F₈. Examples of the combination of two or three groups independently selected from OC₂F₄, OC₃F₆, and OC₄F₈ include, but are not limited to, -OC₂F₄OC₃F₆-, -OC₂F₄OC₄F₈-, -OC₃F₆OC₂F₄-, -OC₃F₆OC₃F₆-, -OC₃F₆OC₄F₈-, -OC₄F₈OC₄F₈-, - OC₄F₈OC₃F₆-, -OC₄F₈OC₂F₄-, -OC₂F₄OC₂F₄OC₃F₆-, -OC₂F₄OC₂F₄OC₄F₈-, -OC₂F₄OC₃F₆OC₂F₄-, -OC₂F₄OC₃F₆OC₃F₆-, -OC₂F₄OC₄F₈OC₂F₄-, - OC₃F₆OC₂F₄OC₂F₄-, -OC₃F₆OC₂F₄OC₃F₆-, -OC₃F₆OC₃F₆OC₂F₄-, and - OC₄F₈OC₂F₄OC₂F₄-. In the above formula (f3), g1 is an integer of preferably 3 or more, and more preferably 5 or more. The above g1 is preferably an integer of 50 or less. In the above formula (f3), OC₂F₄, OC₃F₆, OC₄F₈, OC₅F₁₀, and OC₆F₁₂ may be either linear or branched, and are preferably linear. In this embodiment, the above formula (f3) is preferably -(OC₂F₄-OC₃F₆)_{g1}- or -(OC₂F₄-OC₄F₈)g₁-.

In the above formula (f4), e1 is an integer of preferably 1 or more and 100 or less, and more preferably an integer of 5 or more and 100 or less. The sum of a1, b1, c1, d1, e1, and f1 is preferably 5 or more, and more preferably 10 or more, and it is, for example, 10 or more and 100 or less.

In the above formula (f5), f1 is an integer of preferably 1 or more and 100 or less, and more preferably an integer of 5 or more and 100 or less. The sum of a1, b1, c1, d1, e1, and f1 is preferably 5 or more and more preferably 10 or more, and it is, for example, 10 or more and 100 or less.

In one embodiment, the above R^{F1} is a group represented by the above formula (f1).

In one embodiment, the above R^{F1} is a group represented by the above formula (f2).

In one embodiment, the above R^{F1} is a group represented by the above formula (f3).

In one embodiment, the above R^{F1} is a group represented by the above formula (f4).

In one embodiment, the above R^{F1} is a group represented by the above formula (f5).

In the above R^{F1}, the ratio of e1 to f1 (hereinafter, referred to as an "e/f ratio") is, for example, 0.1 or more and 10 or less, preferably 0.2 or more and 5 or less, more preferably 0.2 to 2, still more preferably 0.2 or more and 1.5 or less, even more preferably 0.2 or more and less than 0.9, and particularly preferably 0.2 or more and 0.85 or less. With the e/f ratio being in the above range, the stability of the fluoropolyether group-containing compound is improved. Here, f1 is an integer of 1 or more.

In one embodiment, the e/f ratio in R^{F1} is preferably 1.0 or more, and it may be, for example, 1.1 or more or 1.3 or more. The e/f ratio in R^{F1} is preferably 10.0 or less, 9.0 or less, more preferably 5.0 or less, still more preferably 2.0 or less, and particularly preferably 1.5 or less. Examples of the e/f ratio in R^{F1} may include 1.0 to 10.0, specifically 1.0 to 5.0, more specifically 1.0 to 2.0, and further specifically 1.0 to 1.5.

In one embodiment, the e/f ratio in R^{F1} may be in the range of 1.0 to 1.2.

In one embodiment, the e/f ratio in R^{F1} may be less than 0.9, for example, 0.8 or less or 0.7 or less. The e/f ratio in R^{F1} is preferably 0.2 or more, more preferably 0.3 or more, still more preferably 0.4 or more, and particularly preferably 0.5 or more. Examples of the e/f ratio in R^{F1} may include 0.2 or more and less than 0.9, specifically 0.4 or more and 0.8 or less, and more specifically 0.5 or more and 0.7 or less.

In one embodiment, d1 is preferably an integer of 1 or more, more preferably 3 or more, and still more preferably 6 or more, and it may be 200 or less, may be 120 or less, may be 60 or less, or may be 54 or less. In the present embodiment, d1 may be 1 to 200, may be 3 to 120, may be 3 to 60, or may be 6 to 60.

In one embodiment, R^{F1} is a group represented by the following formula:

-(OC₃F₆)_{d1}-(OC₂F₄)ₑ₁- (f1)

In the formula, d1 is an integer of 3 to 60, preferably an integer of 6 to 54; e1 is 1; and OC₃F₆ is linear.

In one embodiment, R^{F1} is a group represented by the following formula:

-(OC₃F₆)_{d1}-(OC₂F₄)ₑ₁- (f1)

In the formula, d1 is an integer of 3 to 120, preferably an integer of 6 to 60; e1 is 1; and each OC₃F₆ has a branched chain.
For example, in the present embodiment, the repeating unit is represented by -OCF(CF₃)CF₂- in the formula (f1).

In one embodiment, the formula (1) is represented by the following formula (1a) or (1b):

X¹¹-(R¹¹)ₙ₁₁-R^{F1}-X¹² (1a)

[In the formula:
X¹¹ is a fluorine atom or a hydrogen atom;
X¹² is a chlorine atom, a bromine atom, or an iodine atom;
R¹¹ is the same as defined above, and is preferably a C₁₋₁₆ perfluoroalkylene group, and more preferably a linear C₁₋₆ perfluoroalkylene group, in particular C₁₋₃ perfluoroalkylene group;
n11 is 0 or 1; and
R^{F1} is the same as defined above.] or

X¹¹-(R¹¹)ₙ₁₁-R^{F1}-X¹² (1b)

[In the formula:
X¹¹ and X¹² are each independently a chlorine atom, a bromine atom, or an iodine atom;
R¹¹ is preferably a C₁₋₆ alkylene group optionally substituted with one or more fluorine atoms, in particular C₁₋₃ perfluoroalkylene group, and more preferably a linear C₁₋₆ perfluoroalkylene group, in particular C₁₋₃ perfluoroalkylene group;
n11 is 0 or 1, preferably 1; and
R^{F1} is the same as defined above.].

The number average molecular weight of the above R^{F1} moiety is not limited, and is, for example, 500 to 30,000, preferably 1,500 to 30,000, and more preferably 2,000 to 10,000. In the present specification, the number average molecular weight of R^{F1} is defined as a value obtained by ¹⁹F-NMR measurement.

In another embodiment, the number average molecular weight of the R^{F1} moiety may be 500 to 30,000, preferably 1,000 to 20,000, more preferably 2,000 to 15,000, and still more preferably 2,000 to 10,000, such as 3,000 to 6,000.

In another embodiment, the number average molecular weight of the R^{F1} moiety may be 4,000 to 30,000, preferably 5,000 to 10,000, and more preferably 6,000 to 10,000.

In one embodiment, R^{F1} is a group represented by the following formula:

-(OC₆F₁₂)ₐ₁-(OC₅F₁₀)_{b1}-(OC₄F₈)_{c1}-(OC₃F₆)_{d1}-(OC₂F₄)ₑ₁-(OCF₂)_{f1}-,

and the number average molecular weight of the R^{F1} moiety is 10,000 or less, preferably 500 to 10,000, and more preferably 1,000 to 9,000.
In the formula:
a1, b1, c1, e1, and f1 are each independently an integer of 0 or more, and a value satisfying the above number average molecular weight;
d1 is an integer of 1 or more, may be 1 to 60, may be 3 to 60, may be 6 to 60, or may be 6 to 54; and
the occurrence order of the respective repeating units enclosed in parentheses provided with a1, b1, c1, d1, e1, or f1 is not limited in the formula.

In the above embodiment, R^{F1} is preferably a group represented by the following formula:

-(OC₃F₆)_{d1}-(OC₂F₄)ₑ₁-.

The metal catalyst contains at least one selected from the group consisting of Ni, Pd, Pt, Cu, Ag, Zn, Cd, Hg, and Mg. By using such a metal catalyst, the activity of an end of the fluoropolyether group-containing compound (A) represented by the formula (1), the end contributing to the reaction, may be improved. It is preferable that the metal atom contained in the above metal catalyst is only a transition metal atom. In one embodiment, the metal atom contained in the above metal catalyst is Ni, Pd, Pt, Cu, Ag, Zn, Cd, Hg, and Mg only.

The above metal catalyst may be a simple substance or complex having a ligand of a metal selected from the group consisting of Ni, Pd, Pt, Cu, Ag, Zn, Cd, Hg, and Mg, or a composite such as an alloy containing at least one metal selected from the above group. It is preferable that the metal atom contained in the above complex or composite is only a transition metal atom. In one embodiment, the metal atom contained in the above complex or composite is Ni, Pd, Pt, Cu, Ag, Zn, Cd, Hg, and Mg only.

It is preferable that the above metal catalyst contains at least one selected from the group consisting of Ni, Pd, Pt, Cu, and Ag.

In one embodiment, a simple substance of the metal is used as the metal catalyst.

In one embodiment, a complex having a ligand is used as the metal catalyst. It is preferable that such a ligand is a phosphine atom-containing ligand, an olefin group-containing ligand, or a nitrogen atom-containing ligand, and examples thereof may include triphenylphosphine (that is, PPh₃), tri-t-butylphosphine (that is, P(t-Bu)₃), tri-n-butylphosphine (that is, P(n-Bu)₃), tri(ortho-tolyl)phosphine (that is, P(o-Tol)₃), (C₆F₅)₃P (that is, Tpfpp), (C₆F₅)₂PCH₂CH₂P(C₅F₅)₂) (that is, Dfppe), 1,2-bis(diphenylphosphino)ethane (that is, dppe), 1,3-bis(diphenylphosphino)propane (that is, dppp), 1,1'-bis(diphenylphosphino)ferrocene (that is, dppf), (S)-2,2'-bis(diphenylphosphino)-1,1'-binaphthyl (that is, (S)-BINAP), 1,5-cyclooctadiene (that is, COD), bipyridine (that is, bpy), phenanthroline (that is, phen), or salts thereof.

In one embodiment, the metal catalyst is at least one selected from the group consisting of metallic copper, metallic nickel, and a complex of the metal thereof having a ligand. The ligand may be one of those described above, and is specifically 1,5-cyclooctadiene.

In one embodiment, the metal catalyst is at least one selected from the group consisting of metallic copper and a nickel complex having a ligand (for example, Ni(COD)₂).

In one embodiment, the metal catalyst is metallic copper and/or a copper complex having a ligand, and specifically metallic copper.

In one embodiment, the metal catalyst is metallic nickel and/or a nickel complex having a ligand, and specifically a nickel complex having a ligand (for example, Ni(COD)₂).

In one embodiment, a composite such as an alloy is used as the metal catalyst.

The metal catalyst may be included in an amount of 0.2 moles or more, 0.5 moles or more, 1 mole or more, 2 moles or more, or 3 moles or more relative to 1 mole of the fluoropolyether group-containing compound (A), for example. The metal catalyst may be included in an amount of 10 moles or less, or 8 moles or less relative to 1 mole of the fluoropolyether group-containing compound (A), for example. The metal catalyst may be included in an amount of, for example, 0.2 to 10 moles, 0.5 to 10 moles, 1 to 10 moles, or 2 to 10 moles relative to 1 mole of the fluoropolyether group-containing compound (A), for example.

The above metal catalyst may be a metal catalyst precursor into which a ligand is introduced at the time of reaction. Examples of the metal catalyst precursor may include one having at least one selected from the group consisting of Ni, Pd, Pt, Cu, Ag, Zn, Cd, Hg, and Mg, and it may be one having at least one selected from the group consisting of Ni, Pd, Pt, Cu, and Ag. Specific examples of the metal catalyst precursor may include tris(dibenzylideneacetone)dipalladium. That is, in the above step (I), there may be a compound that can function as the above ligand.

The reaction of step (I) is not limited and may be carried out in a solvent or without a solvent, but it is particularly preferably carried out in a solvent.

The above solvent is not limited as long as it is a solvent that does not adversely affect the reaction. Examples of the solvent may include a fluorinated solvent or a non-fluorinated solvent. These may be used alone as one type, or may be used in combination of two or more types.

The fluorinated solvent is a solvent containing one or more fluorine atoms. Examples of the fluorinated solvent may include a compound in which at least one of the hydrogen atoms of a hydrocarbon is replaced by a fluorine atom, such as a hydrofluorocarbon, a hydrochlorofluorocarbon, and a perfluorocarbon; and a hydrofluoroether. Here, the term "hydrocarbon" refers to a compound that contains only carbon and hydrogen atoms.

Examples of the hydrofluorocarbon (in other words, a compound in which some of the hydrogen atoms are substituted by fluorine atoms, but not by chlorine atoms) may include bis(trifluoromethyl)benzene, specifically 1,3-bis(trifluoromethyl)benzene (m-XHF), 1,1,1,2,2,3,3,4,4,5,5,6,6-tridecafluorooctane, C₆F₁₃CH₂CH₃ (for example, Asahiklin (R) AC-6000 manufactured by Asahi Glass Co., Ltd.), and 1,1,2,2,3,3,4-heptafluorocyclopentane (for example, Zeorora (R) H manufactured by ZEON Corporation).

Examples of the hydrochlorofluorocarbon may include HCFC-225 (for example, Asahiklin AK-225 manufactured by AGC Inc.) and HFO-1233zd(Z) (for example, Celefin 1233Z manufactured by Central Glass Co., Ltd.). Examples of the perfluorocarbon may include perfluorohexane, perfluoromethylcyclohexane, perfluoro-1,3-dimethylcyclohexane, and perfluorobenzene.

Examples of the hydrofluoroether may include an alkyl perfluoroalkyl ether (the perfluoroalkyl group and the alkyl group may be linear or branched) such as perfluoropropyl methyl ether (C₃F₇OCH₃) (for example, Novec (R) 7000 manufactured by Sumitomo 3M Limited), perfluorobutyl methyl ether (C₄F₉OCH₃) (for example, Novec (R) 7100 manufactured by Sumitomo 3M Limited), perfluorobutyl ethyl ether (C₄F₉OC₂H₅) (for example, Novec (R) 7200 manufactured by Sumitomo 3M Limited), and perfluorohexyl methyl ether (C₂F₅CF(OCH₃)C₃F₇) (for example, Novec (R) 7300 manufactured by Sumitomo 3M Limited); and CF₃CH₂OCF₂CHF₂ (for example, Asahiklin (R) AE-3000 manufactured by Asahi Glass Co., Ltd.).

Among the fluorinated solvents listed above, m-XHF, HFE7100, HFE7200, HFE7300, AC-6000, perfluorohexane, and perfluorobenzene are preferred.

Examples of the non-fluorinated solvent may include a S atom-containing solvent, an amide solvent, and a polyether solvent.

Examples of the S atom-containing solvent may include dimethyl sulfoxide, sulfolane, dimethyl sulfide, and carbon disulfide.

Examples of the amide solvent may include N-methylpyrrolidone, N,N-dimethylformamide, dimethylacetamide, and hexamethylphosphoric triamide.

Examples of the polyether solvent may include monoglyme and diglyme.

These solvents can be used alone or as a mixture of two or more types.

The solvent is preferably at least one selected from the group consisting of 1,1,1,2,2,3,3,4,4,5,5,6,6-tridecafluorooctane, 1,3-bis(trifluoromethyl)benzene, diglyme, and dimethyl sulfoxide, and it is more preferably at least one selected from the group consisting of 1,1,1,2,2,3,3,4,4,5,5,6,6-tridecafluorooctane, 1,3-bis(trifluoromethyl)benzene, and dimethyl sulfoxide. When the solvent thereof is used, it can dissolve the fluoropolyether group-containing compound (A) and can have the increased activity of the compound.

The amount of solvent may be set as appropriate, but for example, it may be added in an amount of 0.1 to 10.0 parts by mass or may be added in an amount of 0.5 to 3.0 parts by mass relative to the fluoropolyether group-containing compound (A).

The reaction temperature of step (I) is not limited, and the reaction may be carried out at 60 to 200°C, 80 to 180°C, or 100 to 160°C, for example.

In step (I), an additional compound may be further added as required. Examples of the additional compound may include a reoxidant.

The type of reoxidant can be selected as appropriate depending on the compounds to be used and other factors. Examples of the reoxidant may include oxygen, tert-butyl hydroperoxide, N-methylmorpholine, and N-oxide.

In step (I), by reacting the fluoropolyether group-containing compound (A) in the presence of the metal catalyst, a fluoropolyether group-containing compound (B) is formed. The reaction in step (I) contains reacting the fluoropolyether group-containing compound (A) and another fluoropolyether group-containing compound (A). In other words, the reaction of step (I) includes a coupling reaction between two fluoropolyether group-containing compounds (A) or a reaction among three or more fluoropolyether group-containing compounds (A).

That is, the fluoropolyether group-containing compound (B) formed in step (I) contains two or more moieties derived from the fluoropolyether group-containing compound (A). Here, examples of the moiety derived from the fluoropolyether group-containing compound (A) may include - (R¹¹)ₙ₁₁-R^{F1}-. In other words, the fluoropolyether group-containing compound (B) may be represented by the following formula (3):

X-((R¹¹)ₙ₁₁-R^{F1})ₙ-X (3)

[In the formula:
X is X¹¹ or X¹²;
X¹¹ and X¹² are each independently a fluorine atom, a chlorine atom, a bromine atom, an iodine atom, or a hydrogen atom, and for example, a fluorine atom;
R¹¹, n11, and R^{F1} are each the same as defined above; and
n is an integer of 2 or more, and preferably an integer of 2 to 10.].

In the above embodiment, n is 2, for example.

In the above embodiment, n is 3, for example.

The reaction in step (I) may include a reaction between the fluoropolyether group-containing compound (B) and another fluoropolyether group-containing compound (B), or a reaction between the fluoropolyether group-containing compound (B) and the fluoropolyether group-containing compound (A).

In one embodiment, the reaction of step (I) is a coupling reaction between two fluoropolyether group-containing compounds (A). In the present embodiment, the fluoropolyether group-containing compound (B) may be represented by any of the following formulae:

X¹¹-(R¹¹)ₙ₁₁-R^{F1}-(R¹¹)ₙ₁₁-R^{F1}X¹² (3-1)

[In the formula:
X¹¹ and X¹² are each independently a chlorine atom, a bromine atom, or an iodine atom, in one embodiment, a bromine atom or an iodine atom, preferably an iodine atom, and in another embodiment, a fluorine atom or a hydrogen atom;
R¹¹, n11, and R^{F1} are each the same as defined above.];

X¹¹-(R¹¹)ₙ₁₁-R^{F1}-R^{F1}-(R¹¹)ₙ₁₁-X¹¹ (3-2)

[In the formula:
X¹¹ is each independently a fluorine atom, a chlorine atom, a bromine atom, an iodine atom, or a hydrogen atom, and for example, may be a fluorine atom or a hydrogen atom; and
R¹¹, n11, and R^{F1} are each the same as defined above.]; and

X¹²-R^{F1}-(R¹¹)ₙ₁₁-(R¹¹)ₙ₁₁-R^{F1}-X¹² (3-3)

[In the formula:
X¹² is each independently a fluorine atom, a chlorine atom, a bromine atom, an iodine atom, or a hydrogen atom, and for example, may be a fluorine atom or a hydrogen atom; and
R¹¹, n11, and R^{F1} are each the same as defined above.].

In one embodiment, the fluoropolyether group-containing compound (B) is represented by the following formula:

X²¹-(R²¹)ₙ₂₁-R^{F2}-(O)ₙ₂₃-(R²²)ₙ₂₂-X²² (2).

In the formula (2), X²¹ and X²² are each independently a fluorine atom, a chlorine atom, a bromine atom, an iodine atom, or a hydrogen atom. In one embodiment, at least one of X²¹ and X²² is a fluorine atom, and in one embodiment, they are both fluorine atoms.

In the formula (2), R²¹ and R²² are each independently a C₁₋₁₆ alkylene group optionally substituted with one or more fluorine atoms.

In the above C₁₋₁₆ alkylene group optionally substituted with one or more fluorine atoms, the "C₁₋₁₆ alkylene group" may be linear or branched, and is preferably a linear or branched C₁₋₆ alkylene group, in particular C₁₋₃ alkylene group, and more preferably a linear C₁₋₆ alkylene group, in particular C₁₋₃ alkylene group.

The above R²¹ and R²² are each independently, preferably a C₁₋₁₆ alkylene group substituted with one or more fluorine atoms, and more preferably a C₁₋₁₆ perfluoroalkylene group.

The above C₁₋₁₆ perfluoroalkylene group may be linear or branched, and is preferably a linear or branched C₁₋₆ perfluoroalkylene group, in particular C₁₋₃ perfluoroalkylene group, and more preferably a linear C₁₋₆ perfluoroalkylene group, in particular C₁₋₃ perfluoroalkylene group.

In one embodiment, R²¹ and R²² are each independently a C₁₋₆ alkylene group optionally substituted with one or more fluorine atoms.

In one embodiment, R²¹ and R²² may be a moiety derived from R¹¹ in the formula (1).

In the formula (2), n21 is 0 or 1. In one embodiment, n21 is 0. In one embodiment, n21 is 1.

In the formula (2), n22 is 0 or 1. In one embodiment, n22 is 0. In one embodiment, n22 is 1.

In the formula (2), n23 is 0 or 1. In one embodiment, n23 is 0. In one embodiment, n23 is 1.

In one embodiment, n21 is 1, and n22 and n23 are 0.

In one embodiment, n21 is 1, and n22 and n23 are 1. However, the group represented by -(O)ₙ₂₃-(R²²)ₙ₂₂- does not contain the repeating units contained in R^{F2}.

In the formula (2), R^{F2} is a group represented by the following formula:

-(OC₆F₁₂)ₐ₂-(OC₅F₁₀)_{b2}-(OC₄F₈)_{c2}-(OC₃R^{Fa}₆)_{d2}-(OC₂F₄)ₑ₂-(OCF₂)_{f2}-(ORf²)_{g2}-.

In the present specification, the left side of R^{F2} is bonded to R²¹ and the right side of R^{F2} is bonded to the oxygen atom.

In the formula:
Rf² is a C₇₋₁₆ alkylene group optionally substituted with one or more fluorine atoms;
a2, b2, c2, d2, e2, and f2 are each independently an integer of 0 to 200, and the sum of a2, b2, c2, d2, e2, and f2 is 1 or more;
g2 is an integer of 0 or 1 or more;
the occurrence order of the respective repeating units enclosed in parentheses provided with a2, b2, c2, d2, e2, f2, or g2 is not limited in the formula; and
R^{Fa} is each independently at each occurrence a hydrogen atom, a fluorine atom, or a chlorine atom.

R^{Fa} is preferably a hydrogen atom or a fluorine atom, and more preferably a fluorine atom.

In the formula (2), the structures of the respective repeating units of R^{F2} are the same as defined in the formula (1). For example, the repeating unit OC₃F₆ may be linear or branched. In one embodiment, the repeating unit OC₃F₆ has only a linear chain. In one embodiment, the repeating unit OC₃F₆ has only a branched chain. In one embodiment, the repeating unit OC₃F₆ has both linear chain and branched chain.

In one embodiment, d2 is an integer of 1 or more.

In one embodiment, the above g2 is an integer of 0 to 2. In one embodiment, the above g2 is 0 or 1.

The above Rf² is each independently a C₇₋₁₆ alkylene group optionally substituted with one or more fluorine atoms.

In the above C₇₋₁₆ alkylene group optionally substituted with one or more fluorine atoms, the "C₇₋₁₆ alkylene group" may be linear or branched.

The above Rf² is preferably a C₇₋₁₆ alkylene group substituted with one or more fluorine atoms, and more preferably a C₇₋₁₆ perfluoroalkylene group.

The above C₇₋₁₆ perfluoroalkylene group may be linear or branched.

In one embodiment, d2 in R^{F2} is preferably an integer of 58 or more, more preferably an integer of 65 or more, and still more preferably may be an integer of 70 or more. d2 in R^{F2} is preferably an integer of 200 or less, more preferably an integer of 180 or less, and still more preferably an integer of 120 or less.

In one embodiment, d2 in R^{F2} may be an integer of 58 or more, may be an integer of 60 or more, may be an integer of 200 or less, may be an integer of 180 or less, or may be an integer of 120 or less. For example, d2 may be 60 to 200.

In one embodiment, d2 in R^{F2} may be 58 to 200, may be 65 to 180, may be 70 to 180, or may be 70 to 120.

In the present embodiment, a2, b2, c2, e2, and f2 are each independently, preferably an integer of 0 to 2, and more preferably 0 or 1; and
g2 is preferably an integer of 0 to 2, and more preferably 0 or 1.

In the present embodiment, R^{F2} is preferably represented by the following formula:

-(OC₄F₈)_{c2}-(OC₃F₆)_{d2}-.

In the formula, c2 is preferably an integer of 0 to 2, and more preferably 0 or 1, and d2 is the same as defined above. In the formula, the occurrence order of the respective repeating units enclosed in parentheses provided with c2 and d2 is not limited in the formula. OC₃F₆ may be linear or branched, and is preferably linear.

Conventionally, most of the fluoropolyether group-containing compounds (B) have been synthesized by the method of introducing fluorine atoms using fluorine gas in the process (direct fluorination). However, in direct fluorination, it is difficult to obtain a high molecular weight fluoropolyether group-containing compound (B) since a decomposition reaction occurs depending on the reaction conditions. In contrast, the production method of the present disclosure can be used to obtain a high molecular weight fluoropolyether group-containing compound (B).

In one embodiment, R^{F2} contains a group represented by the following formula:

-(OC₃F₆)_{d2}-(ORf³)ₕ₂-.

In the formula:
each independently, d2 may be an integer of 54 to 200, may be an integer of 54 to 180, may be an integer of 60 to 180, may be an integer of 60 to 120, may be an integer of 58 to 200, may be an integer of 65 to 180, may be an integer of 70 to 180, or may be an integer of 70 to 120;
h2 is each independently 0 or 1;
the occurrence order of the respective repeating units enclosed in parentheses provided with d2 and h2 is not limited in the formula;
Rf³ is each independently -CF₂- or -C₄F₈-; and
(OC₃F₆) may be linear or branched, and is preferably linear.

In one embodiment, R^{F2} is a group represented by the following formula:

-(OC₃F₆)_{d21}-(ORf³)ₕ₂₁-.

In the formula:
each independently, d21 may be an integer of 58 to 200, may be an integer of 65 to 180, may be an integer of 70 to 180, or may be an integer of 70 to 120;
h21 is an integer of 0 to 2 (in one example, h21 is 0, in another example, h21 is 1, and in still another example, h21 is 2);
the occurrence order of the respective repeating units enclosed in parentheses provided with d21 and h21 is not limited in the formula;
Rf³ is each independently -CF₂- or -C₄F₈-; and
(OC₃F₆) may be linear or branched, and is preferably linear.

In one embodiment, R^{F2} is a group represented by the following formula:

-((OC₃F₆)_{d3}-(ORf³)ₕ₃)ₙ₃₁-.

In the formula:
d3 is each independently an integer of 3 to 200, preferably an integer of 5 to 100, and more preferably an integer of 10 to 80;
h3 is each independently 0 or 1;
Rf³ is each independently -CF₂- or -C₄F₈-;
n31 is an integer of 2 or more, and preferably an integer of 2 to 3;
(OC₃F₆) may be linear or branched, and is preferably linear.

In the above embodiment, the total value of d3 included in R^{F2} may be an integer of 58 or more, may be an integer of 65 or more, or may be an integer of 70 or more; and it may be an integer of 200 or less, may be an integer of 180 or less, or may be an integer of 120 or less, for example. The total value of d3 included in R^{F2} may be 58 to 200, may be 65 to 180, may be 70 to 180, or may be 70 to 120, for example.

In one embodiment, R^{F2} is a group represented by the following formula:

-(OC₃F₆)_{d22}-(OC₄F₈)-(OC₃F₆)_{d23}-

or

-(OC₃F₆)_{d24}-((OC₄F₈)_{d25}-(OC₃F₆)_{d26})_{d28}-(OC₄F₈)_{d27}-(OC₃F₆)_{d29}-.

In the formula,
d22 and d23 are each independently an integer of 3 to 100, and preferably an integer of 5 to 80, and
d24 is an integer of 3 to 100, d25 is an integer of 0 to 1, d26 is an integer of 3 to 100, d27 is an integer of 0 to 1, d28 is an integer of 1 to 30 and d29 is an integer of 3 to 100.
(OC₃F₆) may be linear or branched, and is preferably linear.

In the above embodiment, for example, at least one of d25 and d27 is 1.

In the above embodiment, for example, the total value of d22 and d23 included in R^{F2} may be an integer of 58 or more, may be an integer of 65 or more, or may be an integer of 70 or more; and it may be an integer of 200 or less, may be an integer of 180 or less, or may be an integer of 120 or less. For example, the total value of d22 and d23 included in R^{F2} may be 58 to 200, may be 65 to 180, may be 70 to 180, or may be 70 to 120.

In the above embodiment, for example, the total value of d24, d26, and d29 included in R^{F2} may be an integer of 58 or more, may be an integer of 65 or more, or may be an integer of 70 or more; and it may be an integer of 200 or less, may be an integer of 180 or less, or may be an integer of 120 or less. For example, the total value of d24, d26, and d29 included in R^{F2} may be 58 to 200, may be 65 to 180, may be 70 to 180, or may be 70 to 120.

In one embodiment, R^{F2} is a group represented by the following formula:

-(OC₃F₆)_{d22}-(OC₄F₈)-(OC₃F₆)_{d23}-

, and
d22 and d23 are each independently an integer of 3 to 100 and preferably an integer of 5 to 80, and
(OC₃F₆) may be linear or branched, and is preferably linear.

In the above embodiment, the total value of d22 and d23 included in R^{F2} may be an integer of 58 or more, may be an integer of 65 or more, or may be an integer of 70 or more; and it may be an integer of 200 or less, may be an integer of 180 or less, or may be an integer of 120 or less, for example. The total value of d22 and d23 included in R^{F2} may be 58 to 200, may be 65 to 180, may be 70 to 180, or may be 70 to 120, for example.

In one embodiment, R^{F2} is represented by the following formula:

-((OC₃F₆)_{d3}-(ORf^{3'})ₕ₃)ₙ₃₂-(R^{F3}-(ORf^{3"})_{h3'})ₙ₃₃-.

In the formula:
d3 and h3 are each the same as defined above;
in (OC₃F₆)_{d3}, OC₃F₆ may be linear or branched, and is preferably linear;
Rf^{3'} is each independently a C₁₋₁₆ alkylene group (but excluding a C₃ alkylene group) optionally substituted with one or more fluorine atoms, and may be -CF₂- or-C₄F₈-, for example;
R^{F3} is represented by the following formula:

   -(OC₆F₁₂)_{a3'}-(OC₅F₁₀)_{b3'}-(OC₄F₈)_{c3'}-(OC₃R^{Fa}₆)_{d3'}-(OC₂F₄)_{e3'}-(OCF₂)_{f3'}-

   , provided that R^{F3} excludes a structure represented only by (OC₃F₆) ;
a3', b3', c3', d3', e3', and f3' are each independently an integer of 0 to 200, the sum of a3', b3', c3', d3', e3', and f3' is 1 or more, and the occurrence order of the respective repeating units enclosed in parentheses provided with a3', b3', c3', d3', e3', or f3' is not limited in R^{F3};
R^{Fa} is each independently at each occurrence a hydrogen atom, a fluorine atom, or a chlorine atom, and preferably a fluorine atom;
Rf^{3"} is each independently a C₇₋₁₆ alkylene group optionally substituted with one or more fluorine atoms;
h3' is each independently 0 or 1;
n32 is an integer of 1 or more, preferably 1 or 2, and is 1, for example;
n33 is an integer of 1 or more, may be 1 to 3, may be 1 or 2, may be 1, or may be 2, for example; and
the occurrence order of the respective repeating units enclosed in parentheses provided with n32 or n33 is not limited in the above formula.

In the present embodiment, R^{F3} is each independently, preferably a group represented by the formula (f2), the formula (f3), the formula (f4), or the formula (f5).

In the present embodiment, in the C₇₋₁₆ alkylene group optionally substituted with one or more fluorine atoms in Rf^{3"}, the "C₇₋₁₆ alkylene group" may be linear or branched.

In the present embodiment, the above Rf^{3"} is preferably a C₇₋₁₆ alkylene group substituted with one or more fluorine atoms, and more preferably a C₇₋₁₆ perfluoroalkylene group.

In the present embodiment, the above C₇₋₁₆ perfluoroalkylene group may be linear or branched.

In the present embodiment, for example, n32 and n33 may each be 1, n32 may be 1 and n33 may be 2, or n32 may be 2 and n33 may be 1.

In the present embodiment, the total value of d3 included in R^{F2} may be an integer of 58 or more, may be an integer of 65 or more, or may be an integer of 70 or more; and it may be an integer of 200 or less, may be an integer of 180 or less, or may be an integer of 120 or less, for example. The total value of d3 included in R^{F2} may be 58 to 200, may be 65 to 180, may be 70 to 180, or may be 70 to 120, for example.

In one embodiment, R^{F2} is represented by the following formula:

-(OC₃F₆)_{d3}-(ORf^{3'})ₕ₃-(OC₃F₆)_{d3'}-.

In the formula:
in (OC₃F₆)_{d3}, OC₃F₆ may be linear or branched, and is preferably linear;
Rf^{3'} is the same as defined above, and preferably-CF₂-;
d3 and h3 are each the same as defined above;
in (OC₃F₆)_{d3'}, OC₃F₆ has a branched structure, and is represented by -OC(CF₃)FCF₂- or -OCF₂CF(CF₃)-, for example; and
d3' is an integer of 1 to 200, and preferably an integer of 5 to 100.

In the above embodiment, the total value of d3 and d3' included in R^{F2} may be an integer of 58 or more, may be an integer of 65 or more, or may be an integer of 70 or more; and it may be an integer of 200 or less, may be an integer of 180 or less, or may be an integer of 120 or less, for example. The total value of d3 and d3' included in R^{F2} may be 58 to 200, may be 65 to 180, may be 70 to 180, or may be 70 to 120, for example.

In one embodiment, R^{F2} is represented by the following formula:

-(OC₃F₆)_{d3}-(ORf^{3'})ₕ₃-(R^{F3'}-(ORf^{3"})_{h3'})-.

In (OC₃F₆)_{d3}, OC₃F₆ may be linear or branched, and is preferably linear;
Rf^{3'} is the same as defined above and preferably-CF₂-;
d3, h3, Rf^{3"}, and h3' are each the same as defined above;
R^{F3'} is a group represented by the formula (f2), the formula (f3), the formula (f4), or the formula (f5), preferably a group represented by the formula (f2), and may be a group represented by -((OC₂F₄)_{e3'}-(OCF₂)_{f3'})-, for example; and
in -((OC₂F₄)_{e3'}- (OCF₂)_{f3'})-, the occurrence order of the respective repeating units enclosed in parentheses provided with e3' and f3' is not limited.

In the above embodiment, for example, the total value of d3 included in R^{F2} may be an integer of 58 or more, may be an integer of 65 or more, or may be an integer of 70 or more; and it may be an integer of 200 or less, may be an integer of 180 or less, or may be an integer of 120 or less. For example, the total value of d3 included in R^{F2} may be 58 to 200, may be 65 to 180, may be 70 to 180, or may be 70 to 120.

In one embodiment, the number average molecular weight of the fluoropolyether group-containing compound (B) is a value exceeding 10,000. The number average molecular weight may be 10,000 to 30,000, or may be 12,000 to 20,000. Here, the number average molecular weight is defined as a value obtained by ¹⁹F-NMR measurement.

Since the production method of the present disclosure comprises step (I), control of the reaction can be facilitated, and for example, the reaction can proceed easily. Furthermore, in step (I), the reaction of the fluoropolyether group-containing compound (A) with another fluoropolyether group-containing compound (A) occurs. As a result, compounds with a lower molecular weight are unlikely to be formed.

The production method of the present disclosure may further comprise concentrating, purifying, drying, or the like the reaction product obtained in step (I).

As the method for concentrating the reaction product, any method that may be normally carried out can be used. Examples of the concentration method may include concentration using membrane filtration, concentration using centrifugation, and evaporative concentration.

As the purification method, any method that may be normally carried out can be used. Examples of the purification method may include ultrafiltration, purification using chromatography, solvent extraction, distillation, recrystallization, and a combination thereof.

As the drying method, any method that may be normally carried out can be used. As the drying method, for example, after adding a drying agent such as magnesium sulfate, hydrate of sodium sulfate (mirabilite), or molecular sieves, the drying agent may be filtered out to obtain a solution containing the reaction product as the filtrate, and then the solution may be concentrated.

The production method of the present disclosure may be provided with a fluorination step after step (I).

In one embodiment, after step (I), a step of forming yet another group at an end of the fluoropolyether group-containing compound (B) can be provided. Here, examples of the other group may include a perfluoroalkyl group such as a C₁₋₆ perfluoroalkyl group. That is, by using the method of the present disclosure, the range of molecular design of high molecular weight fluorine-containing oils can be expanded.

### (Composition)

Hereinafter, one embodiment of the present disclosure, a composition, will be described.

The composition of the present disclosure comprises a fluoropolyether group-containing compound (B).

The composition of the present disclosure may further comprise an additional component. Examples of the additional component may include a solvent, a pH adjuster, a (non-reactive) silicone compound that may be understood as a silicone oil (hereinafter, referred to as a "silicone oil"), and a catalyst.

The composition of the present disclosure can further have a fluoropolyether group-containing silane compound having a fluoropolyether group in the molecular backbone and a hydrolyzable group bonded to a Si atom at a molecular terminal or in a terminal part. Examples of such a silane compound may include compounds described in JP 2016-138240 A, JP 2014-218639 A, JP 2017-082194 A, and the like.

The composition of the present disclosure may be used as a surface-treating agent, or an additive such as a (non-reactive) silicone compound that may be understood as a silicone oil (for example, a compound referred to as a "silicone oil"), a raw material for greases, a sealant, or a monomer for resins.

While the embodiments have been described above, it will be understood that a wide variety of modifications in form and details can be made without departing from the spirit and scope of the claims.

### Examples

The present disclosure will be described more specifically through the following Examples, but it is not limited to these Examples. Note that, in the present Examples, the occurrence order of the repeating units constituting fluoropolyether is not limited.

### (Example 1)

Under an argon atmosphere, 5.16 g of F(CF₂CF₂CF₂O)ₙCF₂CF₂-I (weight average molecular weight (Mw) = 6,100), 132 mg of metallic copper, and 5.0 mL of dimethyl sulfoxide were introduced into a flask. Note that the weight average molecular weight is a value determined by ¹⁹F NMR.

This reaction solution was stirred at 150°C for 16 hours and then cooled to room temperature. The obtained reaction solution was passed through silica gel column chromatography. Thereafter, volatiles were distilled off and a product was obtained with a yield of 79%.

The obtained compound was analyzed using ¹⁹F NMR, and as a result, it was confirmed that a product (1) was obtained.

### Product (1):

F(CF₂CF₂CF₂O)ₘ₁(CF₂CF₂CF₂CF₂O)(CF₂CF₂CF₂O)ₘ₂CF₂CF₂CF₃ (Mw = 10,870)
¹⁹F NMR (D₂O, C₆F₆ ; δ 163): δ -80.52 (t, J = 7.57 Hz, 3F, CF₃CF₂CF₂O-), -81.10 to -82.30 (m, (4n+4)F, (CF₂CF₂CF₂O)ₙ, CF₂CF₂CF₂CF₂), -82.50 to -82.80 (m, 2F, CF₃CF₂CF₂O),-125.20 to -125.60 (m, 4F, CF₂CF₂CF₂CF₂), -127.70 to-128.15 (m, 2nF, (CF₂CF₂CF₂O)ₙ), -128.68 (s, 2F, CF₃CF₂CF₂O).

### (Example 2)

Under an argon atmosphere, 1.24 g of F(CF₂CF₂CF₂O)ₙCF₂CF₂-I (weight average molecular weight (Mw) = 6,100), 145 mg of Ni(COD)₂, and 10.0 mL of dimethyl sulfoxide were introduced into a flask. This reaction solution was stirred at 150°C for 16 hours and then cooled to room temperature. The obtained reaction solution was passed through silica gel column chromatography and volatiles were distilled off to obtain the target product (2).

### Product (2):

F(CF₂CF₂CF₂O)ₘ₁(CF₂CF₂CF₂CF₂O)(CF₂CF₂CF₂O)ₘ₂CF₂CF₂CF₃ (Mw = 10,870)
¹⁹F NMR (D₂O, C₆F₆ ; δ 163): δ -80.52 (t, J = 7.57 Hz, 3F, CF₃CF₂CF₂O-), -81.10 to -82.30 (m, (4n+4)F, (CF₂CF₂CF₂O)ₙ, CF₂CF₂CF₂CF₂), -82.50 to -82.80 (m, 2F, CF₃CF₂CF₂O),-125.20 to -125.60 (m, 4F, CF₂CF₂CF₂CF₂), -127.70 to-128.15 (m, 2nF, (CF₂CF₂CF₂O)ₙ), -128.68 (s, 2F, CF₃CF₂CF₂O).

### Industrial Applicability

The fluorine-containing oil produced by the method of the present disclosure may be used in applications where heat resistance or durability against chemical substances is required.

## Claims

1. A method for producing a fluoropolyether group-containing compound, comprising reacting a fluoropolyether group-containing compound (A) represented by the following formula:
X¹¹-(R¹¹)ₙ₁₁-R^{F1}-X¹² (1)
wherein
X¹¹ and X¹² are each independently a fluorine atom, a chlorine atom, a bromine atom, an iodine atom, or a hydrogen atom, provided that at least one of X¹¹ and X¹² is a chlorine atom, a bromine atom, or an iodine atom;
R¹¹ is a C₁₋₁₆ alkylene group optionally substituted with one or more fluorine atoms;
n11 is 0 or 1; and
R^{F1} is a group represented by the following formula: -(OC₆F₁₂)ₐ₁-(OC₅F₁₀)_{b1}-(OC₄F₈)_{c1}-(OC₃R^{Fa}₆)_{d1}-(OC₂F₄)ₑ₁-(OCF₂)_{f1}-;
a1, b1, c1, d1, e1, and f1 are each independently an integer of 0 to 200, the sum of a1, b1, c1, d1, e1, and f1 is 1 or more, and the occurrence order of the respective repeating units enclosed in parentheses provided with a1, b1, c1, d1, e1, or f1 is not limited in the formula; and
R^{Fa} is each independently at each occurrence a hydrogen atom, a fluorine atom, or a chlorine atom, in the presence of a metal catalyst to form a fluoropolyether group-containing compound (B) containing two or more moieties derived from the fluoropolyether group-containing compound (A).

2. The method for producing a fluoropolyether group-containing compound according to claim 1, wherein the metal catalyst contains at least one selected from the group consisting of Ni, Pd, Pt, Cu, Ag, Zn, Cd, Hg, and Mg.

3. The method for producing a fluoropolyether group-containing compound according to claim 1 or 2, wherein the metal catalyst contains at least one selected from the group consisting of Ni, Pd, Pt, Cu, and Ag.

4. The method for producing a fluoropolyether group-containing compound according to any one of claims 1 to 3, wherein the formula (1) is represented by the following formula (1a) or (1b):
X¹¹-(R¹¹)ₙ₁₁-R^{F1}-X¹² (1a)
where
X¹¹ is a fluorine atom or a hydrogen atom;
X¹² is a chlorine atom, a bromine atom, or an iodine atom;
R¹¹ is a C₁₋₁₆ alkylene group optionally substituted with one or more fluorine atoms;
n11 is 0 or 1; and
R^{F1} is the same as defined in claim 1, or
X¹¹-(R¹¹)ₙ₁₁-R^{F1}-X¹² (1b)
where
X¹¹ and X¹² are each independently a chlorine atom, a bromine atom, or an iodine atom;
R¹¹ is a C₁₋₆ alkylene group optionally substituted with one or more fluorine atoms;
n11 is each independently 0 or 1; and
R^{F1} is the same as defined in claim 1.

5. The method for producing a fluoropolyether group-containing compound according to any one of claims 1 to 4, wherein R^{Fa} is a fluorine atom.

6. The method for producing a fluoropolyether group-containing compound according to any one of claims 1 to 5, wherein R^{F1} is each independently at each occurrence represented by the following formula (f1), (f2), (f3), (f4), or (f5):
-(OC₃F₆)_{d1}-(OC₂F₄)ₑ₁- (f1)
where d1 is an integer of 1 to 200 and e1 is 1;
-(OC₄F₈)_{c1}-(OC₃F₆)_{d1}-(OC₂F₄)ₑ₁-(OCF₂)_{f1}- (f2)
where c1 and d1 are each independently an integer of 0 or more and 30 or less, and e1 and f1 are each independently an integer of 1 or more and 200 or less,
the sum of c1, d1, e1, and f1 is 2 or more, and
the occurrence order of the respective repeating units enclosed in parentheses provided with a subscript c1, d1, e1, or f1 is not limited in the formula;
-(R⁶-R⁷)_{g1}- (f3)
where R⁶ is OCF₂ or OC₂F₄,
R⁷ is a group selected from OC₂F₄, OC₃F₆, OC₄F₈, OC₈F₁₀, and OC₆F₁₂, or a combination of two or three groups independently selected from these groups, and
g1 is an integer of 2 to 100;
-(OC₆F₁₂)ₐ₁-(OC₅F₁₀)_{b1}-(OC₄F₈)_{c1}-(OC₃F₆)_{d1}-(OC₂F₄)ₑ₁-(OCF₂)_{f1}- (f4)
where e1 is an integer of 1 or more and 200 or less, a1, b1, c1, d1, and f1 are each independently an integer of 0 or more and 200 or less, the sum of a1, b1, c1, d1, e1, and f1 is at least 1, and the occurrence order of the respective repeating units enclosed in parentheses provided with a1, b1, c1, d1, e1, or f1 is not limited in the formula; or
-(OC₆F₁₂)ₐ₁-(OC₅F₁₀)_{b1}-(OC₄F₈)_{c1}-(OC₃F₆)_{d1}-(OC₂F₄)ₑ₁-(OCF₂)_{f1}- (f5)
where f1 is an integer of 1 or more and 200 or less, a1, b1, c1, d1, and e1 are each independently an integer of 0 or more and 200 or less, the sum of a1, b1, c1, d1, e1, and f1 is at least 1, and the occurrence order of the respective repeating units enclosed in parentheses provided with a1, b1, c1, d1, e1, or f1 is not limited in the formula.

7. The method for producing a fluoropolyether group-containing compound according to any one of claims 1 to 6, wherein n11 is 1.

8. The method for producing a fluoropolyether group-containing compound according to any one of claims 1 to 7, wherein the method is carried out in a solvent.

9. The method for producing a fluoropolyether group-containing compound according to claim 8, wherein the solvent is a fluorinated solvent and/or a non-fluorinated solvent.

10. A fluoropolyether group-containing compound represented by the following formula:
X²¹-(R²¹)ₙ₂₁-R^{F2}-(O)ₙ₂₃-(R²²)ₙ₂₂-X²² (2)
wherein
X²¹ and X²² are each independently a fluorine atom, a chlorine atom, a bromine atom, an iodine atom, or a hydrogen atom;
R²¹ and R²² are each independently a C₁₋₁₆ alkylene group optionally substituted with one or more fluorine atoms;
n21, n22, and n23 are each independently 0 or 1; and
R^{F2} is a group represented by the following formula:
-(OC₃F₆)_{d22}-(OC₄F₈)-(OC₃F₆)_{d23}-
or
-(OC₃F₆)_{d24}-((OC₄F₈)_{d25}-(OC₃F₆)_{d26})_{d28}-(OC₄F₈)_{d27}-(OC₃F₆)_{d29}-;
d22 and d23 are each independently an integer of 3 to 100; and
d24 is an integer of 3 to 100, d25 is an integer of 0 to 1, d26 is an integer of 3 to 100, d27 is an integer of 0 to 1, d28 is an integer of 1 to 30, and d29 is an integer of 3 to 100.

11. The fluoropolyether group-containing compound according to claim 10, wherein R^{F2} is a group represented by the following formula:
-(OC₃F₆)_{d22}-(OC₄F₈)-(OC₃F₆)_{d23}-;
and
d22 and d23 are each independently an integer of 3 to 100.
